# EUROPEAN PATENT APPLICATION

(11) **EP 4 773 642 A1**
(43) Date of publication of application: **08.07.2026**
(21) Application number: 25226996.4
(22) Date of filing: 23.12.2025
(51) Int. Cl.: H04W 8/24, H04W 72/00, H04B 1/26

(54) **METHOD, APPARATUS, DEVICE, AND STORAGE MEDIUM FOR COMMUNICATION**

(30) Priority: 31.12.2024 CN 202412000067
(71) Applicant: Nokia Solutions and Networks Oy, 02610 Espoo (FI)
(72) Inventor: LIU, Yu Yu, Shanghai (CN); LI, Xin Wei, Shanghai (CN); XU, Feng, Shanghai (CN); ZHANG, Min, Shanghai (CN)
(74) Representative: DREISS Patentanwälte PartG mbB

(57) **Abstract**

Example embodiments of the present disclosure relate to a method, apparatus, device, and computer-readable storage medium for communication. A method for communication includes: configuring, at a terminal device, at least one frequency conversion component with at least one respective first reference frequency value, the at least one frequency conversion component being configured for frequency conversion between a physical transmission medium and an air interface, the physical transmission medium being disposed between the terminal device and a network device; in response to detecting a first cell by a frequency scan, receiving, from the network device, first system information of the first cell through the physical transmission medium, the first system information indicating a logical frequency of the first cell; and determining at least one respective first target frequency value of the at least one frequency conversion component based on the at least one respective first reference frequency value of the at least one frequency conversion component and the logical frequency of the first cell, the first target frequency value being configured to perform the frequency conversion for the first cell.

## Description

### FIELDS

Example embodiments of the present disclosure relate to the field of communications technologies, and in particular, to methods, apparatus, devices, and computer-readable storage medium for frequency band conversion.

### BACKGROUND

Communication between a terminal device and a network device is typically performed through a wireless communication protocol. Compared with wireless communication, wired communication is more stable and has a higher Signal to Interference plus Noise Ratio (SINR). For example, compared with wireless communication via an air interface, wired communication via a hybrid fiber coaxial cable (HFC) is more stable and has a high SINR.

### SUMMARY

In a first aspect of the present disclosure, a method for communication is provided. The method includes: configuring, at a terminal device, at least one frequency conversion component with at least one respective first reference frequency value, the at least one frequency conversion component being configured for frequency conversion between a physical transmission medium and an air interface, the physical transmission medium being disposed between the terminal device and a network device; in response to detecting a first cell by a frequency scan, receiving, from the network device, first system information of the first cell through the physical transmission medium, the first system information indicating a logical frequency of the first cell; and determining at least one respective first target frequency value of the at least one frequency conversion component based on the at least one respective first reference frequency value of the at least one frequency conversion component and the logical frequency of the first cell, the first target frequency value being configured to perform the frequency conversion for the first cell.

In a second aspect of the present disclosure, a method for communication is provided. The method includes: determining, at a network device, at least one physical frequency corresponding to a logical frequency of a cell, the at least one physical frequency being configured for a physical transmission medium between the network device and a terminal device; and transmitting, based on the at least one physical frequency, system information of the cell to the terminal device through the physical transmission medium, the system information indicating the logical frequency of the cell.

According to a third aspect of the present disclosure, an apparatus for communication is provided, including: means for configuring, at a terminal device, at least one frequency conversion component with at least one respective first reference frequency value, the at least one frequency conversion component being configured for frequency conversion between a physical transmission medium and an air interface, the physical transmission medium being disposed between the terminal device and a network device; means for receiving, from the network device, first system information of a first cell through the physical transmission medium in response to detecting the first cell by a frequency scan, the first system information indicating a logical frequency of the first cell; and means for determining at least one respective first target frequency value of the at least one frequency conversion component based on the at least one respective first reference frequency value of the at least one frequency conversion component and the logical frequency of the first cell, the first target frequency value being configured to perform the frequency conversion for the first cell.

According to a fourth aspect of the present disclosure, an apparatus for communication is provided, including: means for determining, at a network device, at least one physical frequency corresponding to a logical frequency of a cell, the at least one physical frequency being configured for a physical transmission medium between the network device and a terminal device; means for transmitting, based on the at least one physical frequency, system information of the cell to the terminal device through the physical transmission medium, the system information indicating the logical frequency of the cell.

In a fifth aspect of the present disclosure, there is provided a computer-readable medium having instructions stored thereon that, when executed by at least one processing unit, cause the at least one processing unit to be configured to perform the method according to the first aspect of the present disclosure, or the method according to the second aspect of the present disclosure.

It should be understood that the summary described in this disclosure is not intended to limit key features or important features of implementations in the present disclosure, nor is it intended to limit the scope in the present disclosure. Other features in the present disclosure will become readily understood from the following description.

### BRIEF DESCRIPTION OF DRAWINGS

Example embodiments of the present disclosure are presented by way of example, and their advantages are explained in more detail below with reference to the accompanying drawings, where:
FIG. 1 illustrates a schematic diagram of an environment in which example embodiments described in the present disclosure can be implemented;
FIG. 2 illustrates a schematic diagram of a communication signaling flow for frequency conversion according to some example embodiments of the present disclosure;
FIG. 3 illustrates a schematic diagram of an example system architecture for implementing communication according to some example embodiments of the present disclosure;
FIG. 4 is a flowchart of a communication method at a terminal device according to some example embodiments of the present disclosure;
FIG. 5 illustrates a flowchart of a communication method at a network device according to some example embodiments of the present disclosure;
FIG. 6 illustrates a schematic diagram of a computer-readable medium according to some example embodiments of the present disclosure; and
FIG. 7 illustrates a simplified block diagram of a device suitable for implementing example embodiments of the present disclosure.

Throughout the drawings, the same or similar reference numerals represent the same or similar element.

### DETAILED DESCRIPTION

Principles in the present disclosure will be described below with reference to several example embodiments shown in the drawings. It should be understood that these specific example embodiments are described only to enable those skilled in the art to better understand and implement the present disclosure, without suggesting any limitation as to the scope of the disclosure in any way.

As used herein, the term "including" and similar terms would be appreciated as open-ended inclusion, that is, "including but not limited to". The term "based on" would be appreciated as "at least partially based on". The term "one embodiment" or "the embodiment" would be appreciated as "at least one embodiment". The terms "first", "second", and the like may refer to different or same objects. Other definitions, either explicit or implicit, may also be included below.

As used herein, the term "determining" encompasses a wide variety of actions. For example, "determining" may include calculating, computing, processing, deriving, investigating, finding (e.g., finding in a table, a database or another data structure), ascertaining and the like. Also, "determining" may include receiving (e.g., receiving information), accessing (e.g., accessing data in a memory), and the like. Also, "determining" may include resolving, selecting, choosing, establishing and the like.

Herein, unless stated explicitly, performing a step "in response to A" does not indicate that the step is performed immediately after "A" occurs and one or more intervening steps may be included.

As used herein, , the term "circuitry" may refer to one or more of the following: (a) hardware-only circuit implementations (such as implementations in only analog and/or digital circuitry) and (b) combinations of hardware circuits and software, such as (as applicable): (i) a combination of analog and/or digital hardware circuit(s) with software/firmware and (ii) any portions of hardware processor(s) with software (including digital signal processor(s)), software, and memory(ies) that work together to cause an apparatus, such as optical communication apparatuses or other computing devices, to perform various functions) and (c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit or similar integrated circuit in an OLT or other computing device.

As used herein, the term "communication network" refers to a network following any suitable communication standards, such as New Radio (NR), Long Term Evolution (LTE), LTE-Advanced (LTE-A), Wideband Code Division Multiple Access (WCDMA), High-Speed Packet Access (HSPA), Narrow Band Internet of Things (NB-IoT) and so on. Furthermore, the communications between a terminal device and a network device in the communication network may be performed according to any suitable generation communication protocols, including, but not limited to, the first generation (1G), the second generation (2G), 2.5G, 2.75G, the third generation (3G), the fourth generation (4G), 4.5G, the fifth generation (5G), the sixth generation (6G) communication protocols, and/or any other protocols either currently known or to be developed in the future. Embodiments of the present disclosure may be applied in various communication systems, including but not limited to, terrestrial communication systems, non-terrestrial communication systems, or combinations thereof. Given the rapid development in communications, there will of course also be future type communication technologies and systems with which the present disclosure may be embodied. It should not be seen as limiting the scope of the present disclosure to only the aforementioned system.

As used herein, the term "network device" refers to a node in a communication network via which a terminal device accesses the network and receives services therefrom. The network device may refer to a base station (BS) or an access point (AP), for example, a node B (NodeB or NB), an evolved NodeB (eNodeB or eNB), a new radio (NR) NB (also referred to as a gNB), a Remote Radio Unit (RRU), a radio header (RH), a remote radio head (RRH), a relay, an integrated access and backhaul (IAB) node, a low power node such as a femto, pico, etc.

As used herein, the term "terminal device" refers to any terminal device capable of wireless communication. By way of example and rather than limitation, a terminal device may also be referred to as a network device, a user equipment (UE), a subscriber station (SS), a portable subscriber station, a mobile station (MS), or an access terminal (AT). The terminal device may include, but is not limited to, a mobile phone, a cellular phone, a smart phone, an IP voice (VoIP) phone, a wireless local loop phone, a tablet computer, a wearable terminal device, a personal digital assistant (PDA), a portable computer, a desktop computer, an image capture terminal device such as a digital camera, a gaming terminal device, a music storage and playback device, a vehicle mounted wireless terminal device, a wireless endpoint, a mobile station, a laptop embedded device (LEE), a laptop mounted device (LME), a universal serial bus (USB) dongle, a smart device, a wireless customerpremises equipment (CPE), an Internet of things (IoT) device, a watch or other wearable device, a head mounted display (HMD), a vehicle, a drone, a medical device and applications (e.g., remote surgery), industrial equipment and applications (e.g., robots and/or other wireless devices operating in an industrial and/or automated processing chain environment), consumer electronic devices, devices operating on commercial and/or industrial wireless networks, and the like. The terminal device may correspond to a mobile terminal (MT) part of the IAB node (e.g., a relay node). In the following description, the terms "terminal device", "network device", and "terminal", "User equipment" and "UE" may be used interchangeably.

As used herein, the term "circuit" refers to one or more of:
(a) hardware-only circuit implementations (such as implementations of only analog and/or digital circuit); and
(b) a combination of hardware circuit and software, such as, if applicable:
   (i) a combination of analog and/or digital hardware circuits and software/firmware, and
   (ii) any portion of the hardware processor and software (including digital signal processors, software, and memory that work together to cause an apparatus, such as an OLT or other computing device, to perform various functions); and
(c) hardware circuits and/or processors, such as a microprocessor or a portion of a microprocessor, that require software (e.g., firmware) for operation, but the software may not be present when it is not needed for operation.

The definition of a circuit applies to all usage scenarios of this term in this application, including in any claims. As another example, the term "circuit" as used herein also covers an implementation of merely a hardware circuit or processor (or multiple processors), or a portion of a hardware circuit or processor, or its accompanying software or firmware. For example, if applicable to a particular claim element, the term "circuit" also covers a baseband integrated circuit or processor integrated circuit or similar integrated circuit in an OLT or other computing device.

As mentioned above, between a terminal device and a network device, wired communication is more stable than wireless communication and has a higher SINR. However, for a network device, an available frequency band of wired communication is different from an available frequency band of wireless communication, and the network device and the terminal device should use the same parameter to convert a frequency for receiving/transmitting a signal. In order to reuse existing wireless communication infrastructure in a wired communication environment, conversion from the available frequency band of wireless communication to the available frequency band of wired communication needs to be implemented. For the same network device, the frequency band conversion is usually implemented by manually preconfiguring, at a terminal device side, a mapping relationship between the available frequency band of wireless communication and the available frequency band of wired communication.

Currently, for a network device, conversion from the available frequency band of wireless communication to the available frequency band of wired communication under the network device can be implemented by manually preconfiguring a mapping relationship between the available frequency band of wireless communication and the available frequency band of wired communication. However, when the terminal device changes from one network device to another network device, the preconfigured mapping relationship between the network device and the terminal device cannot be used. Therefore, if a handover occurs, a mapping relationship needs to be manually reconfigured. In addition, in the case of multiple-input multiple-output ((MIMO)), the frequency bands of multiple antenna signals may need to be converted to a frequency band of the same cable, which makes the frequency band conversion more complex. This in turn increases the complexity of manual configuration.

A conventional frequency band conversion solution is specifically described below by taking a New Radio over cable (NRoC) system as an example. The NRoC system is a new product that converts 5G signals between gNB and user equipment (UE) by using a cable. In the NRoC system, the cable provides a stable environment with high SINR, but the available band space of the cable is different from the available band space of the air interface. To reuse 3GPP-based air interface access technologies over the cable, a frequency conversion system needs to be used on the cable side. In addition, MIMO techniques are also used for the NRoC, meaning that signals of multiple antennas may be mapped into one cable, which makes frequency band mapping on the cable more complex.

To enable frequency conversion between the air interface and the cable, a conventional solution is to map the available frequency bands of the air interface to the available frequency bands of the cable by using preconfigured mapping rules. From a UE side or a customer premises equipment (CPE) side, to receive/transmit 5G signals on the cable, the correct frequency point must be found.

The following Table 1 is used as an example. All data in Table 1 may be preconfigured. On the UE/CPE side, frequencies of an external local oscillator (LO) and logical frequencies both need to be preconfigured, and the CPE cannot switch across different radio unit (RU) sectors, because it only knows a configuration of an RU sector to which it is attached.

| **Logical plane: NRoC-gNB side n77** | | | | | | **Physical plane: HFC** | | **AFE** | **Logical plane: NRoC-CP side n77** | |
|---|---|---|---|---|---|---|---|---|---|---|
| Sector | Carrier | Logical frequency (MHz) | Data flow | DU ID | CC ID | Physical frequency (MHz) | HFC-ARFCN | External LO frequency (MHz) | Logical frequency (MHz) | Data flow |
| RU Sector 0 | CC1 | 4150 | 0 | 0 | 0 | 1350 | HFCC1 | 5500 | 4150 | 0 |
| | | | 1 | 0 | 0 | 1550 | HFCC3 | 5700 | | 1 |
| | | | 2 | 0 | 0 | 1750 | HFCC5 | 5900 | | 2 |
| | | | 3 | 0 | 0 | 1950 | HFCC7 | 6100 | | 3 |
| | CC2 | 4050 | 0 | 0 | 1 | 1450 | HFCC2 | 5500 | 4050 | 0 |
| | | | 1 | 0 | 1 | 1650 | HFCC4 | 5700 | | 1 |
| | | | 2 | 0 | 1 | 1850 | HFCC6 | 5900 | | 2 |
| | | | 3 | 0 | 1 | 2050 | HFCC8 | 6100 | | 3 |
| RU Sector 1 | CC1 | 4150 | 0 | 1 | 0 | 2150 | HFCC9 | 6300 | 4150 | 0 |
| | | | 1 | 1 | 0 | 2350 | HFCC 11 | 6500 | | 1 |
| | | | 2 | 1 | 0 | 2550 | HFCC13 | 6700 | | 2 |
| | | | 3 | 1 | 0 | 2750 | HFCC15 | 6900 | | 3 |
| | CC2 | 4050 | 0 | 1 | 1 | 2250 | HFCC10 | 6300 | 4050 | 0 |
| | | | 1 | 1 | 1 | 2450 | HFCC12 | 6500 | | 1 |
| | | | 2 | 1 | 1 | 2650 | HFCC14 | 6700 | | 2 |
| | | | 3 | 1 | 1 | 2850 | HFCC16 | 6900 | | 3 |
| RU Sector 2 | CC1 | 4150 | 0 | 2 | 0 | 2950 | HFCC17 | 7100 | 4150 | 0 |
| | | | 1 | 2 | 0 | 3150 | HFCC19 | 7300 | | 1 |
| | | | 2 | 2 | 0 | 3350 | HFCC21 | 7500 | | 2 |
| | | | 3 | 2 | 0 | 3550 | HFCC22 | 7700 | | 3 |
| | CC2 | 4050 | 0 | 2 | 1 | 3050 | HFCC18 | 7100 | 4050 | 0 |
| | | | 1 | 2 | 1 | 3250 | HFCC20 | 7300 | | 1 |
| | | | 2 | 2 | 1 | 3450 | HFCC22 | 7500 | | 2 |
| | | | 3 | 2 | 1 | 3650 | HFCC24 | 7700 | | 3 |
| RU Sector 3 | CC1 | 4150 | 0 | 3 | 0 | 3750 | HFCC25 | 7900 | 4150 | 0 |
| | | | 1 | 3 | 0 | 3950 | HFCC27 | 8100 | | 1 |
| | | | 2 | NA | NA | NA | NA | NA | | 2 |
| | | | 3 | NA | NA | NA | NA | NA | | 3 |
| | CC2 | 4050 | 0 | 3 | 1 | 3850 | HFCC26 | 7900 | 4050 | 0 |
| | | | 1 | NA | NA | NA | NA | NA | | 1 |
| | | | 2 | NA | NA | NA | NA | NA | | 2 |
| | | | 3 | NA | NA | NA | NA | NA | | 3 |

As shown in Table 1, the gNB and the UE should convert frequency with the same parameters. For gNB, the parameters may be fixed. However, it should be more flexible for UE because the UE may need to access the same gNB via cables of different frequency bands.

In the conventional solution, the frequency bands used by the gNB and the UE/CPE side are aligned offline, that is, manually preconfigured. Furthermore, the UE/CPE cannot support switching among RUs because the UE/CPE does not know the cell frequency mapping for other RUs. The CPE only knows the frequency information of the preconfigured RUs.

To this end, according to an example embodiment of the present disclosure, a solution for communication is provided. In this solution, the terminal device may perform frequency scan and control of a frequency conversion component to perform cell search. The frequency conversion component is configured to perform frequency conversion between a physical transmission medium and an air interface, and the physical transmission medium is disposed between the terminal device and the network device. Upon detecting a cell, the operating parameters of the frequency conversion component are determined and recorded based on the relevant frequency information. In this way, the terminal device can autonomously establish a mapping relationship for frequency conversion, to be used for candidate communication.

For example, the terminal device configures at least one frequency conversion component with at least one respective first reference frequency value. In response to detecting a first cell by a frequency scan, the terminal device receives, from the network device, first system information of the first cell through the physical transmission medium, the first system information indicating a logical frequency of the first cell. The terminal device determines at least one respective first target frequency value of the at least one frequency conversion component based on the at least one respective first reference frequency value of the at least one frequency conversion component and the logical frequency of the first cell. The first target frequency value is configured to perform the frequency conversion for the first cell.

In the solution of the present disclosure, the target frequency values configured to perform frequency conversion for respective cells can be automatically determined by performing frequency scan and control of a frequency conversion component. In this way, the terminal device can implement frequency conversion between a frequency band of an air interface and a frequency band of a physical transmission medium. When switching in different cells, target frequency values for corresponding cells can be determined by an automatic scanning manner, without manual pre-configuration.

Example implementations of the embodiments of the present disclosure are described below with continued reference to the accompanying drawings.

### Example Environment

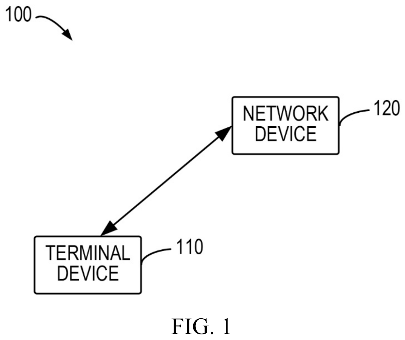

FIG. 1 illustrates a schematic diagram of an example communication network 100 in which example embodiments described herein can be implemented. The communication network 100 may be part of a communication network. The communication network 100 may include a terminal device 110 and a network device 120. The terminal device 110 may communicate with the network device 120.

In some example embodiments, the terminal device 110 may be any type of mobile terminal, fixed terminal, or portable terminal, including a mobile handset, a desktop computer, a laptop computer, a notebook computer, a netbook computer, a tablet computer, a media computer, a multimedia tablet, a personal communication system (PCS) device, a personal navigation device, a personal digital assistant (PDA), an audio/video player, a digital camera/camcorder, a positioning device, a television receiver, a radio broadcast receiver, an electronic book device, a gaming device, or any combination thereof, including accessories and peripherals of these devices, or any combination thereof.

In some example embodiments, the terminal device 110 may be a user equipment (UE) or a customer premises equipment (CPE). The network device 120 may be a base station, such as a gNB.

In some example embodiments, a link from the network device 120 to the terminal device 110 may be referred to as a downlink (DL), and a link from the terminal device 110 to the network device 120 may be referred to as an uplink (UL). In DL, the network device 120 is a transmitting (TX) device (or transmitter), and the terminal device 110 is a receiving (RX) device (or receiver). In the UL, the terminal device 110 is a TX device (or a transmitter), and the network device 120 is an RX device (or a receiver).

In an example embodiment of the present disclosure, a physical transmission medium may be deployed between the terminal device 110 and the network device 120 for communication between the terminal device 110 and the network device 120. The physical transmission medium may be any physical medium enabling signal transmission between the terminal device 110 and the network device 120, for example, a cable. In some example embodiments, the physical transmission medium may include a fiber optic cable, such as a HFC.

It should be understood that the number of devices and their connections shown in FIG. 1 is merely illustrative and not limiting. The communication network 100 may include any suitable number of devices configured to implement example embodiments of the present disclosure. Although not shown, it should be understood that one or more other devices may be deployed in the communication network 100.

Communication in the communication network 100 may be implemented according to any suitable communication protocol(s). Examples of communication protocols include, but are not limited to, cellular communication protocols of the first generation (1G), the second generation (2G), 2.5 G, 2.75 G, the third generation (3G), the fourth generation (4G), 4.5 G, the fifth generation (5G), the sixth generation (6G), and the like, wireless local network communication protocols such as Institute for Electrical and Electronics Engineers (IEEE) 802.11 and the like, and/or any other protocols currently known or to be developed in the future.

Moreover, the communication may utilize any proper wireless communication technology, comprising but not limited to: Code Division Multiple Access (CDMA), Frequency Division Multiple Access (FDMA), Time Division Multiple Access (TDMA), Frequency Division Duplex (FDD), Time Division Duplex (TDD), Multiple-Input Multiple-Output (MIMO), Orthogonal Frequency Division Multiple (OFDM), Discrete Fourier Transform spread OFDM (DFT-s-OFDM) and/or any other technologies currently known or to be developed in the future. Example embodiments are described below with continued reference to the drawings.

### Work Signaling Interaction

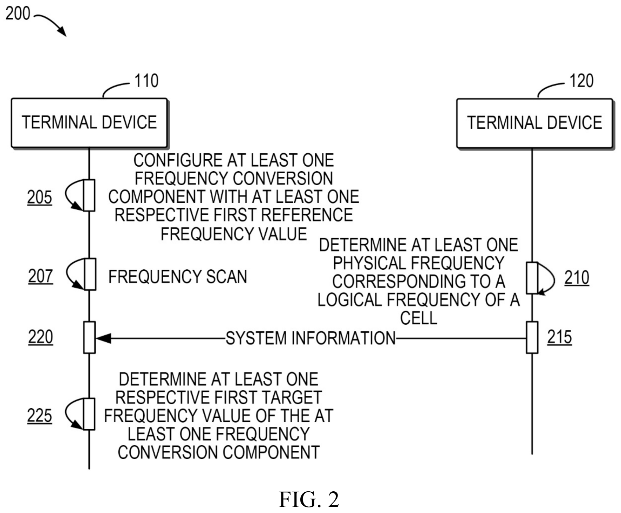

FIG. 2 illustrates a schematic diagram of a communication signaling flow 200 of user frequency conversion according to some example embodiments of the present disclosure. The signaling flow 200 may involve the terminal device 110(e.g., UE or CPE) and the network device 120(e.g., gNB) in FIG. 1. Although a terminal device 110 and a network device 120 are shown in FIG. 2, it should be understood that there may be a plurality of terminal devices performing similar operations of the terminal device 110 described below, and a plurality of network devices performing similar operations of the network device 120 described below.

Generally, in the example in FIG. 2, for a cell, the network device 120 converts a logical frequency of the cell into a physical frequency in a physical transmission medium based on a preconfigured mapping relationship, to perform transmission in the cell. Correspondingly, the terminal device 110 may perform scanning in two dimensions to perform cell detection or cell search. One dimension of scanning is the scanning of the cell frequency (also referred to as frequency scan), and the other dimension of scanning is the scanning of the operating frequency of the frequency conversion component (also referred to as component control). Through scanning in these two dimensions, the terminal device 110 may traverse a logical frequency band of the air interface and an operating frequency range of the frequency conversion component, to determine an operating frequency of the frequency conversion component for different cells. Example embodiments are described below with reference to FIG. 2.

As shown in FIG. 2, in some embodiments, the terminal device 110 configures (205) at least one frequency conversion component with at least one respective first reference frequency value. The at least one frequency conversion component is configured for frequency conversion between a physical transmission medium and an air interface. As mentioned with reference to FIG. 1, a physical transmission medium is disposed between the terminal device 110 and the network device 120. For example, the frequency conversion component may have an operating frequency range. At the beginning of the scan in the component control dimension, the initial frequency value of the frequency conversion component may be configured based on the minimum value of the operating frequency range.

In the case of MIMO communication, signal transmission between the terminal device 110 and the network device 120 includes a plurality of streams. Correspondingly, the terminal device 110 may include a plurality of frequency conversion components, and each frequency conversion component corresponding to one of the plurality of streams and being configured to perform frequency conversion on a signal transmitted in a corresponding stream. In such embodiments, there may be fixed offset values between these frequency conversion components. For example, the first frequency conversion component is configured with a first reference frequency value f0, the second frequency conversion component is configured with a first reference frequency value f0+ df, the third frequency conversion component is configured with a first reference frequency value f0+2*df, and so on, where df represents an offset value.

In some embodiments, the terminal device 110 may include a UE. The network device 120 may include a gNB. The physical transmission media may include HFC. The UE and the gNB may communicate with each other via HFC. Thus, higher stability and higher SINR can be provided.

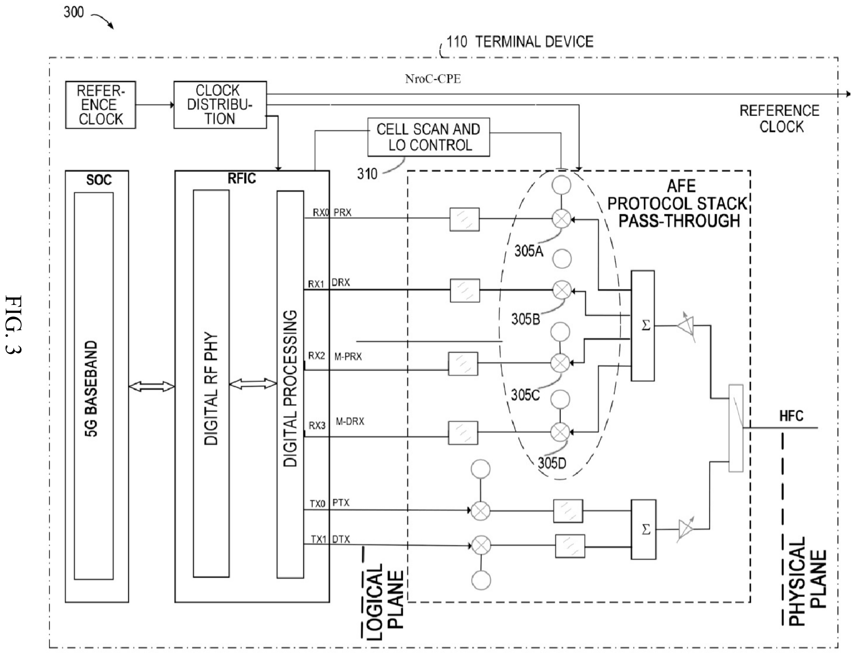

In some embodiments, the frequency conversion component may include a local oscillator (LO). The LO may be used for frequency conversion between HFC and an air interface. The at least one LO may be configured with at least one respective first reference frequency value. FIG. 3 illustrates a schematic diagram of an example system architecture 300 for implementing frequency conversion, according to some example embodiments of the present disclosure.

In this example, the terminal device 110 is shown to include an NRoC-CPE, which includes LOs 305A-305D. The LOs 305 A-305D may be configured for frequency conversion between the physical transmission medium and the air interface. The LOs 305A-305D may correspond to different streams and may have fixed offset values therebetween, such that four antenna ports coupled to the LOs 305A-305D may receive a current signal. It should be noted that the number of the LOs 305A-305D in FIG. 3 is merely an example, and the terminal device 110 may further include more or fewer LOs. The terminal device 110 may include a module 310 for cell scanning and LO control. The module 310 may control the LOs 305A-305D. For example, the module 310 may perform the actions described with respect to the terminal device 110 in FIG. 2.

Continue to refer to FIG. 2. After the operating frequency of the frequency conversion component is configured, the terminal device 110 performs (207) frequency scan within the frequency band range of the air interface, to perform cell detection. A frequency scan described herein may refer to cell scanning performed in any suitable manner. For example, the frequency band range of the air interface may be a logical frequency range in which the base station communicates with the UE.

For example, the terminal device 110 may perform frequency scan in a "virtual" frequency band range, to perform cell detection. For example, for the n77 frequency band, the "virtual" frequency band range may be 3.3 Ghz-4.2 Ghz. The terminal device 110 may perform frequency scan in the 3.3 GHz-4.2 GHz frequency band range, to perform cell detection.

Correspondingly, the network device 120 may perform transmission to the terminal device 110 based on a preconfigured mapping relationship (for example, at least a portion of Table 1). For example, for a cell or any cell, the network device 120 determines (210) at least one physical frequency corresponding to the logical frequency of the cell. The at least one physical frequency is configured for a physical transmission medium between the network device 120 and the terminal device 110. For example, each physical frequency corresponds to one stream in the MIMO communication. The network device 120 transmits (215), based on the at least one physical frequency, system information of the cell to the terminal device through the physical transmission medium. The system information of the cell indicates the logical frequency of the cell, for example, including an absolute value of the logical frequency.

In some embodiments, the system message may include an information element for an absolute logical frequency of a synchronization signal to indicate a logical frequency of the cell. For example, the system message may include a system information block (SIB). A field for the absolute logical frequency of the synchronization signal may be added to the SIB. The synchronization signal may be, for example, a synchronization signal block (SSB). Table 2 shows an example of FrequencyInfoDL-SIB. In this example, the absoluteFrequencySSB(Synchronization Signal Block) field indicates an absolute logical frequency.

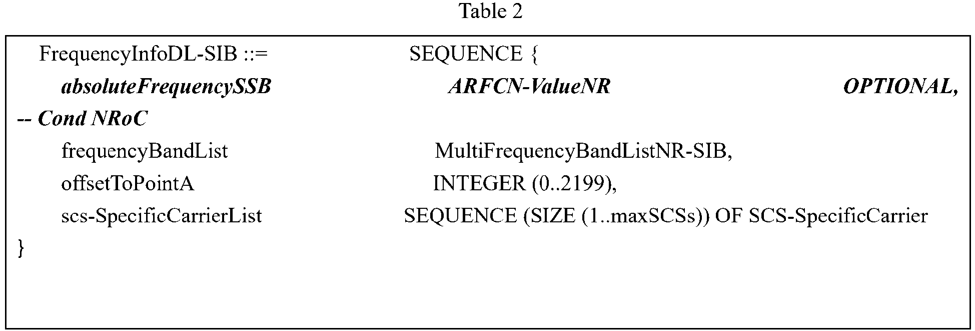

Back to the terminal device 110 side. In response to detecting a cell (also referred to as a first cell) by a frequency scan, the terminal device 110 receives (220) , from the network device 120, first system information of the first cell through the physical transmission medium. As described above, the first system information indicates the logical frequency of the first cell.

In some example embodiments, if the first cell is detected, the terminal device 110 may obtain information related to synchronization with the first cell. The terminal device 110 receives the first system information based on the information related to the synchronization. For example, in a scanning process, if monitoring that signal strength exceeds a threshold, the terminal device 110 may attempt to perform cell synchronization, for example, including time domain synchronization and frequency domain synchronization. After cell synchronization succeeds, the terminal device 110 may receive and decode the master information blocks (MIB) and SIBs.

For example, after receiving the SIB, the terminal device 110 decodes the SIB, and obtains an absolute FrequencySSB field indicating an absolute logical frequency. In this way, the terminal device 110 may determine the real logical frequency of the first cell. In other words, the terminal device 110 may determine a logical frequency corresponding to the first cell based on an air interface communication protocol.

Further, the terminal device 110 determines (225) at least one respective first target frequency value of the at least one frequency conversion component based on the at least one respective first reference frequency value of the at least one frequency conversion component and the logical frequency of the first cell. The first target frequency value is configured to perform the frequency conversion for the first cell. In other words, in the subsequent communication with the network device 120 through the first cell, the frequency conversion component is configured with the first target frequency value.

In some example embodiments, for the frequency conversion component of the at least one frequency conversion component, the terminal device 110 may determine, based on the frequency scan, a frequency scanned with the first cell being detected, and determine the first target frequency value for the frequency conversion component based on the scanned frequency, the logical frequency of the first cell, and the first reference frequency value of the frequency conversion component. For ease of description, the scanned frequency may be denoted as F_{scan}, the logical frequency of the first cell may be denoted as F_{logic}, and the first reference frequency of the frequency conversion component may be denoted as F_{LO}. For example, if F_{scan} = 3300Mhz, F_{logic} = 4150Mhz, F_{LO} = 4600 Mhz, the first target frequency is: F_{logic} - F_{scan}+F_{LO} = 5500 Mhz. That is, 5500 Mhz is the first target frequency value.

After the first target frequency is obtained, a mapping relationship for frequency conversion between the physical transmission medium of the first cell and the air interface is established. For the first cell, the frequency conversion between the physical transmission medium and the air interface can be automatically completed without manual configuration.

In the example embodiment described above, the cell scanning is performed with operating frequencies of the frequency conversion component fixed, thereby detecting a first cell. The terminal device 110 may continue to control the frequency conversion component. That is, the operating frequency of the frequency conversion component may be changed, and then the next cell scanning may be performed to discover more cells.

In some example embodiments, the terminal device 110 configures the at least one frequency conversion component with at least one respective second reference frequency value. For example, the second reference frequency value may be greater than the first reference frequency value. If the second cell is detected by the frequency scan, the terminal device 110 may receive the second system information of the second cell from the network device 120 by using a physical transmission medium (for example, a HFC). The second system information indicates a logical frequency of the second cell. The at least one respective second target frequency value of the at least one frequency conversion component is determined based on the at least one respective second reference frequency value of the at least one frequency conversion component and the logical frequency of the second cell. The second target frequency value is configured to perform the frequency conversion for the second cell.

The terminal device 110 may determine the respective second target frequency value of the at least one frequency conversion component through the second frequency reference value, the second system information of the second cell, and the logical frequency of the second cell. After the second target frequency is obtained, a mapping relationship for frequency conversion between a physical transmission medium and an air interface for a second cell is established. For the second cell, the frequency conversion between the physical transmission medium and the air interface can be automatically completed without manual configuration. A method for obtaining the second target frequency for the second cell is similar to the method for obtaining the first target frequency for the first cell, and details are not described herein again.

After determining the first target frequency value for performing frequency conversion for the first cell, the respective first reference frequency values with which at least one frequency conversion component is respectively configured are changed, and the target frequency value for performing frequency conversion for the plurality of cells may be obtained by using the similar method as described above. That is, a mapping relationship for frequency conversion between a physical transmission medium and an air interface for the plurality of cells is established. Each time a cell is switched, the frequency conversion can be automatically configured without prior manual configuration.

In some example embodiments, the service area of network device 120 may be divided into different sectors. The same cell or component carrier (CC) may occupy different physical frequencies in different sectors. For example, in Table 1, the physical frequencies occupied by CC0 in sector 0 are 1350 MHz, 1550 MHz, 1750 MHz, and 1950 MHz, and the physical frequencies occupied in sector 1 are 2150 MHz, 2350 MHz, 2550 MHz, and 2750 MHz. This results in that for the same cell or CC, the terminal device 110 needs to use different conversion frequencies for different sectors.

Embodiments of the present disclosure may support the terminal device 110 detecting a change of a sector. In some example embodiments, the terminal device 110 may configure the at least one frequency conversion component with at least one respective third reference frequency value. If the first cell is detected again by the frequency scan, the terminal device 110 may receive the first system information of the first cell from the network device 120 through the physical transmission medium. The at least one respective third target frequency value of the at least one frequency conversion component is determined based on the at least one respective third reference frequency value of the at least one frequency conversion component and the logical frequency of the first cell. If the third target frequency value is different from the first target frequency value described above, the terminal device 110 may perform sector switching. Accordingly, the terminal device 110 may determine that the first target frequency value is configured to perform the frequency conversion for the first cell in a first sector and the third target frequency value is configured to perform the frequency conversion for the first cell in a second sector, the second sector being different from the first sector.

In other words, if the third target frequency value is different from the first target value, the terminal device 110 may determine that a new sector is detected. The terminal device 110 may establish a table to record the sector and the associated LO frequency value.

In order to understand the embodiments of the present disclosure more clearly, the specific embodiments of the present disclosure will be described below by taking n77 and AFC as examples. For the n77 air interface frequency band, a frequency band range is 3.3 GHz-4.2 GHz, and for AFC, a frequency band is fixed at 1.35 GHz-3.85 GHz. According to the air-interface frequency band range of n77 and the frequency band range of the AFC, the UE/CPE may obtain the start frequency point and the end frequency point of the LO. The start frequency point is 4.65 GHz (1.35 Ghz+3.3 Ghz), and the end frequency point is 8.05 Ghz (4.2 Ghz+3.85 Ghz). The cell scan and LO control module 310 may perform a cell scan. After the cell scan, the UE/CPE may obtain all cell information for all the RU sectors. Since the UE knows the frequency of the target cell and the target frequency value of the relevant LO, the UE may support switching between different RU sectors.

As an example, on the gNB side, a cell with a frequency of 4150 Mhz is mapped to a cable with a frequency of 1350 Mhz. On the UE/CPE side, the LO is configured with a first reference frequency value of 4650 Mhz. The UE/CPE starts scanning at the starting frequency point of 3300 Mhz for the air interface band range of n77. The UE/CPE monitors signal strength. When the signal strength exceeds a specific threshold, the UE/CPE attempts to perform download synchronization from the gNB side, receives the MIB and the SIB, and decodes the MIB and the SIB. The CPE detects the cell at a frequency of 3300 Mhz. After decoding the SIB, the frequency of the cell is 4150 MHz. The LO may be corrected to 5500 Mhz, specifically as follows: 4150 Mhz (logical frequency of the cell)-3300 Mhz (frequency when the cell is detected)+4650 Mhz (the first reference frequency of the LO) = 5500 Mhz (the logical frequency of the LO).

After correcting the LO, the CPE scans the entire frequency range within one RU sector and may find other cells thereof. If the CPE finds that detected frequencies of some cells are different from actual frequencies, this indicates that there is a new sector. A new sector and a new LO value should be recorded, and the UE may create a table.

In the above description, the embodiments of the present disclosure are mainly described with reference to a first cell, a second cell, a first sector, and a second sector. However, it should be understood that the numbers of cells and sectors in the embodiments of the present disclosure are merely illustrative rather than limiting. Th e embodiments of the present disclosure are applicable to any suitable number of cells and sectors.

### Example Methods

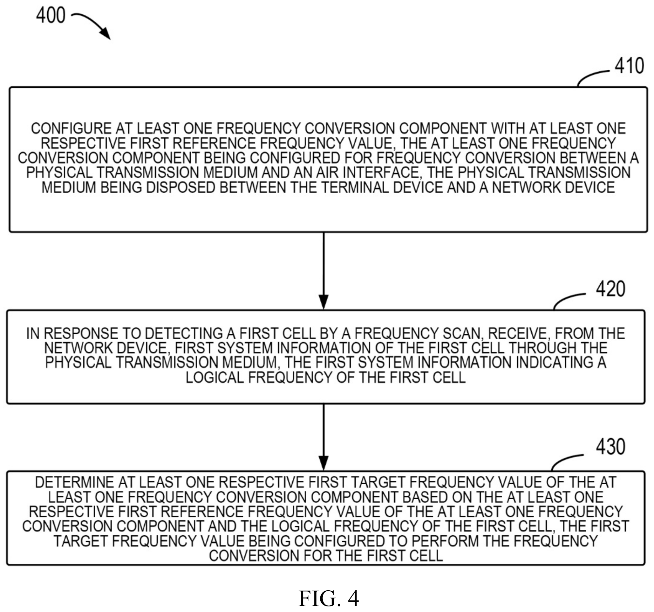

FIG. 4 is a flowchart of a communication method at a terminal device according to some example embodiments of the present disclosure. The method 400 may be implemented, for example, in the example environment 100. For example, it is implemented at the terminal device 110.

At block 410, the terminal device 110 configures at least one frequency conversion component with at least one respective first reference frequency value, the at least one frequency conversion component being configured for frequency conversion between a physical transmission medium and an air interface, the physical transmission medium being disposed between the terminal device and a network device.

At block 420, in response to detecting a first cell by a frequency scan, the terminal device 110 receives from the network device, first system information of the first cell through the physical transmission medium, the first system information indicating a logical frequency of the first cell.

At block 430, the terminal device 110 determines at least one respective first target frequency value of the at least one frequency conversion component based on the at least one respective first reference frequency value of the at least one frequency conversion component and the logical frequency of the first cell, the first target frequency value being configured to perform the frequency conversion for the first cell.

In some embodiments, determining the at least one respective first target frequency value of the at least one frequency conversion component comprises: determining, based on the frequency scan, a frequency scanned with the first cell being detected; and determining, for a frequency conversion component of the at least one frequency conversion component, the first target frequency value for the frequency conversion component based on the scanned frequency, the logical frequency of the first cell, and the first reference frequency value of the frequency conversion component.

In some embodiments, receiving the first system information of the first cell comprises: in response to detecting the first cell, obtaining information related to synchronization with the first cell; and receiving the first system information based on the information related to the synchronization.

In some embodiments, the first system message comprises an information element for an absolute logical frequency of a synchronization signal to indicate the logical frequency of the first cell.

In some embodiments, the method 400 further includes: configuring, at the terminal device, the at least one frequency conversion component with at least one respective second reference frequency value; in response to detecting a second cell by a frequency scan, receiving, from the network device, second system information of the second cell through the physical transmission medium, the second system information indicating a logical frequency of the second cell; and determining at least one respective second target frequency value of the at least one frequency conversion component based on the at least one respective second reference frequency value of the at least one frequency conversion component and the logical frequency of the second cell, the second target frequency value being configured to perform the frequency conversion for the second cell.

In some embodiments, the method 400 further includes: configuring, at the terminal device, the at least one frequency conversion component with at least one respective third reference frequency value; in response to detecting the first cell by a frequency scan, receiving, from the network device, the first system information of the first cell through the physical transmission medium; and determining at least one respective third target frequency value of the at least one frequency conversion component based on the at least one respective third reference frequency value of the at least one frequency conversion component and the logical frequency of the first cell; in response to the third target frequency value being different from the first target frequency value, determining that the first target frequency value is configured to perform the frequency conversion for the first cell in a first sector and the third target frequency value is configured to perform the frequency conversion for the first cell in a second sector, the second sector being different from the first sector.

In some embodiments, a frequency conversion component of the at least one frequency conversion component comprises a local oscillator (LO).

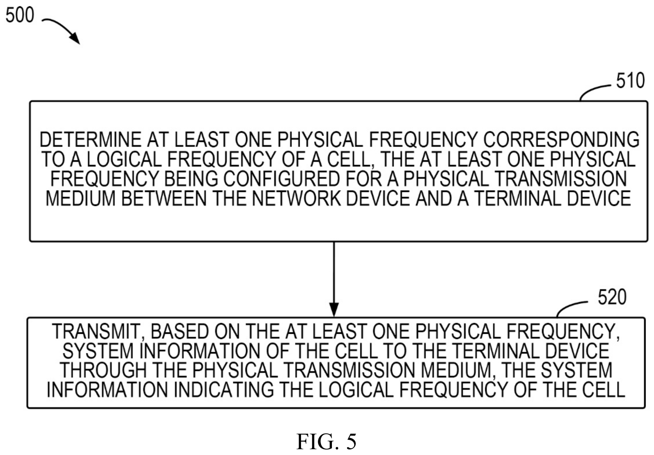

FIG. 5 illustrates a flowchart of a communication method at a network device according to some example embodiments of the present disclosure. The method 500 may be implemented, for example, in the example environment 100. For example, it is implemented at the network device 120.

At block 510, the network device 120 determines at least one physical frequency corresponding to a logical frequency of a cell, the at least one physical frequency being configured for a physical transmission medium between the network device and a terminal device.

In block 520, the network device 120 transmits based on the at least one physical frequency, system information of the cell to the terminal device through the physical transmission medium, the system information indicating the logical frequency of the cell.

In some embodiments, the system message comprises an information element for an absolute logical frequency of a synchronization signal to indicate a logical frequency of the cell.

### Example Apparatus

In some example embodiments, an apparatus for communication may include means for performing corresponding steps of method 400. These means may be implemented in any suitable manner. For example, the means may be implemented as circuitry or software modules.

In some embodiments, the apparatus may include: means for configuring, at a terminal device, at least one frequency conversion component with at least one respective first reference frequency value, the at least one frequency conversion component being configured for frequency conversion between a physical transmission medium and an air interface, the physical transmission medium being disposed between the terminal device and a network device; means for receiving, from the network device, first system information of a first cell through the physical transmission medium in response to detecting the first cell by a frequency scan, the first system information indicating a logical frequency of the first cell; and means for determining at least one respective first target frequency value of the at least one frequency conversion component based on the at least one respective first reference frequency value of the at least one frequency conversion component and the logical frequency of the first cell, the first target frequency value being configured to perform the frequency conversion for the first cell.

In some embodiments, the means for determining the at least one respective first target frequency value of the at least one frequency conversion component may include: means for determining, based on the frequency scan, a frequency scanned with the first cell being detected; and means for determining, for a frequency conversion component of the at least one frequency conversion component, the first target frequency value for the frequency conversion component based on the scanned frequency, the logical frequency of the first cell, and the first reference frequency value of the frequency conversion component.

In some embodiments, the means for receiving the first system information of the first cell may include means for obtaining information related to synchronization with the first cell in response to detecting the first cell; and means for receiving the first system information based on the information related to the synchronization.

In some embodiments, the first system message comprises an information element for an absolute logical frequency of a synchronization signal to indicate the logical frequency of the first cell.

In some embodiments, the apparatus further includes: means for configuring, at the terminal device, the at least one frequency conversion component with at least one respective second reference frequency value;; means for receiving, from the network device, second system information of the second cell through the physical transmission medium in response to detecting the second cell by the frequency scan, the second system information indicating a logical frequency of the second cell; and means for determining at least one respective second target frequency value of the at least one frequency conversion component based on the at least one respective second reference frequency value of the at least one frequency conversion component and the logical frequency of the second cell, the second target frequency value being configured to perform the frequency conversion for the second cell.

In some embodiments, the apparatus further includes: means for configuring, at the terminal device, the at least one frequency conversion component with at least one respective third reference frequency value; means for receiving, from the network device, the first system information of the first cell through the physical transmission medium in response to detecting the first cell by the frequency scan; and means for determining at least one respective third target frequency value of the at least one frequency conversion component based on the at least one respective third reference frequency value of the at least one frequency conversion component and the logical frequency of the first cell; means for determining, in response to the third target frequency value being different from the first target frequency value, that the first target frequency value is configured to perform the frequency conversion for the first cell in a first sector and the third target frequency value is configured to perform the frequency conversion for the first cell in a second sector, the second sector being different from the first sector.

In some embodiments, a frequency conversion component of the at least one frequency conversion component comprises a local oscillator (LO).

In some example embodiments, an apparatus for communication may include means for performing corresponding steps of method 500. These means may be implemented in any suitable manner. For example, the means may be implemented as circuitry or software modules.

In some embodiments, the apparatus may include: means for determining, at a network device, at least one physical frequency corresponding to a logical frequency of a cell, the at least one physical frequency being configured for a physical transmission medium between the network device and a terminal device; and means for transmitting, based on the at least one physical frequency, system information of the cell to the terminal device through the physical transmission medium, the system information indicating the logical frequency of the cell.

In some embodiments, the system message comprises an information element for an absolute logical frequency of a synchronization signal to indicate a logical frequency of the cell.

### Example Devices and Media

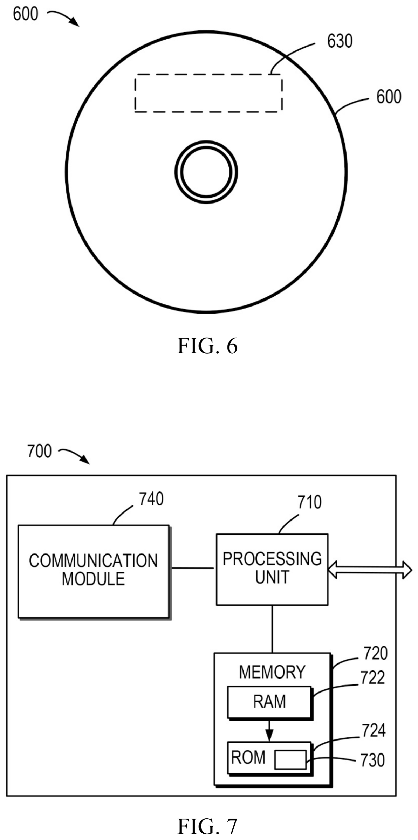

FIG. 7 is a simplified block diagram of a device 700 that is suitable for implementing example embodiments of the present disclosure. The device 700 may be provided to implement the terminal device 110 or the network device 120 in the example environment 100. As shown, the device 700 includes one or more processing units 710, one or more memories 720 coupled to the processing units 710, and one or more communication modules 740 coupled to the processing units 710.

The communication module 740 is for bidirectional communications. In some example embodiments, the communication module 740 has at least one antenna to facilitate communication. In some example embodiments, the communication module 740 may include one or more communication interfaces. The communication interfaces may represent any interface that is necessary for communication with other network elements.

The processing unit 710 may be of any type suitable to the local technical network and may include one or more of the following: general purpose computers, special purpose computers, microcontrollers, digital signal processors (DSPs) and controllers based on multicore controller architecture, as non-limiting examples. The device 700 may have multiple processors, such as an application specific integrated circuit chip that is slaved in time to a clock which synchronizes the main processor.

The memory 720 may include one or more non-volatile memories and one or more volatile memories. Examples of the non-volatile memories include, but are not limited to, a Read Only Memory (ROM) 724, an electrically programmable read only memory (EPROM), a flash memory, a hard disk, a compact disc (CD), a digital video disk (DVD) and other magnetic storage and/or optical storage. Examples of the volatile memories include, but are not limited to, a random access memory (RAM) 722 and other volatile memories that will not last in the power-down duration.

A computer program 730 includes computer executable instructions that are executed by the associated processing unit 710. The instructions of the computer program 730 may include instructions for performing operations/acts of some example embodiments of the present disclosure. The program 730 may be stored in the memory, e.g., the ROM 724. The processing unit 710 may perform any suitable actions and processing by loading the computer program 730 into the RAM 622.

The example embodiments of the present disclosure may be implemented by means of the computer program 730 so that the device 700 may perform any process of the disclosure as discussed with reference to FIG. 1 to FIG. 5. The example embodiments of the present disclosure may also be implemented by hardware or by a combination of software and hardware.

**In** some example embodiments, the computer program 730 may be tangibly contained in a computer readable medium which may be included in the device 700 (such as in the memory 720) or other storage devices that are accessible by the device 700. The computer program 730 may be loaded from the computer readable medium to the RAM 722 for execution. The computer readable medium may include any types of tangible non-volatile storage, such as ROM, EPROM, a flash memory, a hard disk, CD, DVD, and the like.

FIG. 6 shows an example of the computer readable medium600 which may be in form of CD, DVD or other optical storage disk according to some example embodiments of the present disclosure. The computer readable medium 600 has the computer program 630 stored thereon.

Generally, various embodiments of the present disclosure may be implemented in hardware or special purpose circuits, software, logic or any combination thereof. Some aspects may be implemented in hardware, while other aspects may be implemented in firmware or software which may be executed by a controller, microprocessor or other computing device. While various aspects of example embodiments of the present disclosure are illustrated and described as block diagrams, flowcharts, or using some other pictorial representations, it is to be understood that the block, apparatus, system, technique or method described herein may be implemented in, as non-limiting examples, hardware, software, firmware, special purpose circuits or logic, general purpose hardware or controller or other computing devices, or some combination thereof.

Some example embodiments of the present disclosure also provide at least one computer program product tangibly stored on a computer readable medium. In some example embodiments of the present disclosure, the computer readable medium may be non-transitory. The computer program product includes computer-executable instructions, such as those included in program modules, being executed in a device on a target physical or virtual processor, to carry out the method 400 as described in FIG.4 and the method 500 as described in FIG. 5. Generally, program modules include routines, programs, libraries, objects, classes, components, data structures, or the like that perform particular tasks or implement particular abstract data types. The functionality of the program modules may be combined or split between program modules as desired in various embodiments. Machineexecutable instructions for program modules may be executed within a local or distributed device. In a distributed device, program modules may be located in both local and remote storage media.

Computer program code for carrying out methods of the present disclosure may be written in one or more programming languages. The computer program code may be provided to a processor or controller of a general purpose computer, special purpose computer, or other programmable data processing apparatus, such that the program code, when executed by the computer or other programmable data processing apparatus, cause the functions/operations specified in the flowcharts and/or block diagrams to be implemented. The program code may execute entirely on a computer, partly on the computer, as a stand-alone software package, partly on the computer and partly on a remote computer or entirely on the remote computer or server.

In the context of the present disclosure, the computer program code or related data may be carried by any suitable carrier to enable the device, apparatus or processor to perform various processes and operations as described above. Examples of the carrier include a signal, computer readable medium, and the like.

The computer-readable medium may be any tangible medium that contains or stores a program for or in connection with an instruction execution system, apparatus, or device. The computer-readable medium may be a computer-readable signal medium or a computer-readable storage medium. The computer readable medium may include but not limited to an electronic, magnetic, optical, electromagnetic, infrared, or semiconductor system, apparatus, or device, or any suitable combination of the foregoing. More specific examples of the computer readable storage medium would include an electrical connection having one or more wires, a portable computer diskette, a hard disk, a random access memory (RAM), a read-only memory (ROM), an erasable programmable read-only memory (EPROM or Flash memory), an optical storage device, a magnetic storage device, or any suitable combination of the foregoing.

In addition, although operations of the methods of the present disclosure are described in a particular order in the accompanying drawings, this does not require or imply that such operations must be performed in that particular order, or that all illustrated operations must be performed to achieve desired results. Instead, steps depicted in the flowcharts may be performed in a different order. Additionally or alternatively, certain steps may be omitted, and a plurality of steps may be combined into a single step, and/or a single step may be divided into a plurality of steps. It should also be noted that features and functions of two or more apparatuses according to the present disclosure may be embodied in a single apparatus. Conversely, features and functions of a single apparatus described above may be further divided and embodied by a plurality of apparatuses.

Although the present disclosure has been described with reference to a number of specific embodiments, it should be understood that the present disclosure is not limited to the specific embodiments disclosed. The present disclosure is intended to cover various modifications and equivalent arrangements included within the spirit and scope of the appended claims.

## Claims

1. A method for communication, comprising:
configuring (410), at a terminal device (110), at least one frequency conversion component with at least one respective first reference frequency value, the at least one frequency conversion component being configured for frequency conversion between a physical transmission medium and an air interface, the physical transmission medium being disposed between the terminal device (110) and a network device (120);
in response to detecting a first cell by a frequency scan, receiving (420), from the network device (120), first system information of the first cell through the physical transmission medium, the first system information indicating a logical frequency of the first cell; and
determining (430) at least one respective first target frequency value of the at least one frequency conversion component based on the at least one respective first reference frequency value of the at least one frequency conversion component and the logical frequency of the first cell, the first target frequency value being configured to perform the frequency conversion for the first cell.

2. The method of claim 1, wherein determining (430) the at least one respective first target frequency value of the at least one frequency conversion component comprises:
determining, based on the frequency scan, a frequency scanned with the first cell being detected; and
determining, for a frequency conversion component of the at least one frequency conversion component, the first target frequency value for the frequency conversion component based on the scanned frequency, the logical frequency of the first cell, and the first reference frequency value of the frequency conversion component.

3. The method according to claim 1, wherein receiving (420) the first system information of the first cell comprises:
in response to detecting the first cell, obtaining information related to synchronization with the first cell; and
receiving the first system information based on the information related to the synchronization.

4. The method of claim 1, wherein the first system message comprises an information element for an absolute logical frequency of a synchronization signal to indicate the logical frequency of the first cell.

5. The method of claim 1, further comprising:
configuring, at the terminal device (110), the at least one frequency conversion component with at least one respective second reference frequency value;
in response to detecting a second cell by a frequency scan, receiving, from the network device (120), second system information of the second cell through the physical transmission medium, the second system information indicating a logical frequency of the second cell; and
determining at least one respective second target frequency value of the at least one frequency conversion component based on the at least one respective second reference frequency value of the at least one frequency conversion component and the logical frequency of the second cell, the second target frequency value being configured to perform the frequency conversion for the second cell.

6. The method of claim 1, further comprising:
configuring, at the terminal device (110), the at least one frequency conversion component with at least one respective third reference frequency value;
in response to detecting the first cell by a frequency scan, receiving, from the network device (120), the first system information of the first cell through the physical transmission medium; and
determining at least one respective third target frequency value of the at least one frequency conversion component based on the at least one respective third reference frequency value of the at least one frequency conversion component and the logical frequency of the first cell;
in response to the third target frequency value being different from the first target frequency value, determining that the first target frequency value is configured to perform the frequency conversion for the first cell in a first sector and the third target frequency value is configured to perform the frequency conversion for the first cell in a second sector, the second sector being different from the first sector.

7. The method of claim 1, wherein a frequency conversion component of the at least one frequency conversion component comprises a local oscillator, LO.

8. A method for communication, comprising:
determining (510), at a network device (120), at least one physical frequency corresponding to a logical frequency of a cell, the at least one physical frequency being configured for a physical transmission medium between the network device (120) and a terminal device (110); and
transmitting (520), based on the at least one physical frequency, system information of the cell to the terminal device (110) through the physical transmission medium, the system information indicating the logical frequency of the cell.

9. The method of claim 8, wherein the system message comprises an information element for an absolute logical frequency of a synchronization signal to indicate a logical frequency of the cell.

10. An apparatus for communication, comprising:
means for configuring (410), at a terminal device (110), at least one frequency conversion component with at least one respective first reference frequency value, the at least one frequency conversion component being configured for frequency conversion between a physical transmission medium and an air interface, the physical transmission medium being disposed between the terminal device (110) and a network device (120);
means for receiving (420), from the network device (120), first system information of a first cell through the physical transmission medium in response to detecting the first cell by a frequency scan, the first system information indicating a logical frequency of the first cell; and
means for determining (430) at least one respective first target frequency value of the at least one frequency conversion component based on the at least one respective first reference frequency value of the at least one frequency conversion component and the logical frequency of the first cell, the first target frequency value being configured to perform the frequency conversion for the first cell.

11. An apparatus for communication, comprising:
means for determining (510), at a network device (120), at least one physical frequency corresponding to a logical frequency of a cell, the at least one physical frequency being configured for a physical transmission medium between the network device (120) and a terminal device (110);
means for transmitting (520), based on the at least one physical frequency, system information of the cell to the terminal device through the physical transmission medium, the system information indicating the logical frequency of the cell.

12. A device (700) for communication, comprising:
at least one processor (710); and
at least one memory (720) coupled to the at least one processor (710), the at least one memory (720) comprising instructions (730) stored thereon, the at least one memory (720) and the instructions (730) being further configured to, with the at least one processor (710), cause the device (700) to perform the method according to any one of claims 1 to 7.

13. A device (700) for communication, comprising:
at least one processor (710); and
at least one memory (720) coupled to the at least one processor (710), the at least one memory (720) comprising instructions (730) stored thereon, the at least one memory (720) and the instructions (730) being further configured to, with the at least one processor (710), cause the device (700) to perform the method according to any one of claim 8 or 9.

14. A computer-readable medium (600) having instructions (630) stored thereon that, when executed by at least one processing unit, cause the at least one processing unit to perform the method according to any one of claims 1 to 7, or the method according to any one of claim 8 or 9.
